# EUROPÄISCHE PATENTSCHRIFT

(11) **EP 1 603 726 B1**
(45) Veröffentlichungstag und Bekanntmachung des Hinweises auf die Patenterteilung: **02.05.2012**
(21) Anmeldenummer: 04720013.4
(22) Anmeldetag: 12.03.2004
(51) Int. Cl.: B29C 41/04

(54) **VERFAHREN UND VORRICHTUNG ZUR HERSTELLUNG EINES MEHRFARBIGEN KUNSTSTOFFFORMTEILS**
METHOD AND APPARATUS FOR MAKING A MULTI-COLOURED MOULDED PLASTIC PART
PROCÉDÉ ET DISPOSITIF POUR LA FABRICATION D'UNE PIECE MOULEE EN MATIERE PLASTIQUE MULTICOLORE

(30) Priorität: 14.03.2003 DE 10311654
(43) Veröffentlichungstag der Anmeldung: 14.12.2005
(73) Patentinhaber: PEGUFORM GMBH, 79268 Bötzingen (DE)
(72) Erfinder: PALLERBERG, Wilfried, 79268 Boetzingen (DE)
(74) Vertreter: Neunert, Peter Andreas
(86) Internationale Anmeldenummer: PCT/EP2004/050306
(87) Internationale Veröffentlichungsnummer: WO 2004/080685

(56) Entgegenhaltungen:
- WO-A-02/16107
- DE-U- 20 113 936
- GB-A- 968 760
- US-A- 5 234 653
- US-A1- 2004 099 988
- PATENT ABSTRACTS OF JAPAN Bd. 2000, Nr. 01, 31. Januar 2000 (2000-01-31) & JP 11 268057 A (TOYOTA MOTOR CORP), 5. Oktober 1999 (1999-10-05)
- PATENT ABSTRACTS OF JAPAN Bd. 1997, Nr. 12, 25. Dezember 1997 (1997-12-25) & JP 9 207173 A (SHARP CORP), 12. August 1997 (1997-08-12)

## Beschreibung

Die Erfindung betrifft ein Verfahren zur Herstellung eines Kunststoffformteils mit Bereichen unterschiedlicher Farbe, Oberflächenbeschaffenheit oder Materialien. Diese Formteile kommen vorzugsweise im Fahrzeuginnenraum zum Einsatz, wobei sie einer Reihe von Anforderungen genügen müssen. Einerseits spielt der optische Eindruck einer Oberfläche im Fahrzeuginnenraum eine wesentliche Rolle, andererseits müssen die Materialien Temperaturbeständigkeit, Kratzfestigkeit, Stossunempfindlichkeit, Alterungsbeständigkeit, Farbechtheit aufweisen, um einen über Jahre zufriedenstellenden Einsatz zu gewährleisten.

Derzeit stehen derartige Formteile in Millionen von Fahrzeugen im Einsatz. Allerdings sind diese Formteile bislang einfärbig, vorzugsweise in schwarzer oder grauer Farbe gehalten, um Spiegelungen an den Fahrzeugscheiben zu minimieren.

Eine neue Generation von Fahrzeugen soll allerdings auf eine weitere Palette an Farben und Oberflächengestaltungen im Fahrzeuginnenraum zurückgreifen können.

Nach DE4029254A1 ist ein Verfahren zur Herstellung von mehrfarbigen Slushhäuten bekannt, bei welchem ein Galvano mit pulverförmigem Kunststoffmaterial gefüllt wird, dieses Kunststoffmaterial in einem ersten Schritt eines Slush- oder Rotationssinterverfahrens unter Wärmeeinwirkung versintert, worauf ein Teil des versinterten Kunststoffmaterials mittels mechanischen Schneidmitteln abgetrennt wird und in einem zweiten Verfahrensschritt ein pulverförmiges Kunststoffmaterial anderer Farbe eingebracht wird, wodurch sowohl die erste Kunststoffschicht, als auch der Teil des Galvanos, welcher die entnommene zweite Schicht enthalten hat, mit Pulver bedeckt werden. Dieses Pulver versintert wiederum unter Wärmeeinwirkung und bildet somit eine zweite Schicht. An der Trennlinie zwischen erster Schicht und zweiter Schicht findet ein scharfer Farbübergang statt.

Dieses Verfahren funktioniert zufriedenstellend bei der Herstellung dieser Slushhaut. Allerdings zeigen sich im Klimawechseltest Ablösungen. Diese Ablösungen sind dadurch bedingt, dass die Haftung zwischen den beiden Schichten nicht ausreicht, um langandauernden Zyklen von Temperaturschwankungen stand zu halten.

Aus dem Stand der Technik sind verschiedenste Lösungsansätze für dieses Problem bekannt.

Eine Form zur Herstellung eines dreidimensionalen Formteils nach US5234653A besteht aus zwei Hälften, welche durch eine Dichtung voneinander getrennt sind. Die Dichtung folgt dem Verlauf der Trennlinie zwischen den zwei aneinandergrenzenden Schichten unterschiedlicher Farbe oder Materialbeschaffenheit. In einem ersten Schritt wird im sogenannten Rotationssinterverfahren ein Pulverkasten an die Form angedockt, welcher ein Pulver einer ersten Farbe enthält. Das Pulver wird in die eine Formhälfte eingebracht, wobei die andere(n) Formhälfte(n) durch die Dichtung von der einen Formhälfte abgetrennt. Das Pulver versintert unter Zufuhr von Wärme zu einer zusammenhängenden Schicht. Dann wird die Dichtung samt ihrer Trennwand entfernt und ein Pulver einer anderen Beschaffenheit, Farbe oder ähnlichem wird in die zweite Formhälfte eingebracht. Für das zweite Pulver läuft somit ein ähnlicher Prozeß wie für das erste Pulver ab. Dabei bildet sich in dem Bereich, in welchem sich die erste Schicht befindet, eine Doppelschicht aus. Dieses Verfahren kann im Prinzip auch für weitere Dichtungen und weitere Schichten verwendet werden.

Mit diesem Verfahren nach dem Stand der Technik entsteht das Problem, dass die Trennlinie entlang Dichtung unscharf oder verschwommen sein kann. Gerade im Randbereich der Schichten kann es durch den Temperaturgradienten von beheizter Form zu einem teilweisen Anschmelzen der Randbereiche und zu Pulvereinträgen kommen, sodass mit diesem Verfahren nicht immer scharfe Konturen erzeugt werden können.

In der Patentschrift WO0216107A1 wird ein Verfahren zur Herstellung eines Formteils mit verschiedenen Farbeffekten, Materialien oder Oberflächeneffekten vorgestellt. Das Problem der unscharfen Trennlinien wird dadurch umgangen, dass die Polymermaterialien in die beheizte Form eingesprüht werden und die Trennlinie durch eine Maskierung vorgegeben wird, die vor dem Einsprühen des ersten Polymermaterials in die Form eingelegt wird. Dann wird erstes Polymermaterial in flüssigem Zustand eingesprüht, abgekühlt, sodass es sich zumindest teilweise verfestigt, dann wird die Maskierung entfernt und ein zweites Polymer eingebracht, welches sich mit dem ersten Polymer verbindet.

Für das erste flüssige Polymermaterial wird entweder ein Plastisol, ein Hydrosol oder ein Organosol verwendet.

Bei dem zweiten Polymermaterial handelt es sich um ein Pulver, ein Pellet oder bandförmiges Polymer. Dieses Polymermaterial wird entweder durch Rotationssinterverfahren, oder durch ein Sprühverfahren eingetragen.

Die Kombination von pulverförmigen Polymermaterialien, insbesondere PVC Pulver(n) verschiedener Farbe, wird nicht offenbart.

Die Haftung der beiden Polymerschichten aneinander wird durch eine teilweise Überlappung von erster und zweiter Polymerschicht erreicht.

Nicht offenbart wird des weiteren, wie die einzelnen Materialpaarungen dauerhaft aneinander haften. Dieses Problem tritt insbesondere bei unterschiedlichen Wärmeausdehnungskoeffizienten von erstem Polymermaterial und zweitem Polymermaterial auf. Die sehr allgemein gehaltene Aussage, dass bei einem Duroplast eine Vernetzung stattfindet, und dass es zwischen den Oberflächen zweier Duroplaste durch ebendiese Vernetzung zu einer chemischen Bindung kommt, lässt keine Rückschlüsse auf die Qualität und Alterungsbeständigkeit dieser Bindung zu. Zwar wird offenbart, dass vor der Entfernung der Maskierung eine Abkühlung des ersten Polymermaterials erfolgt, aber es gibt keinen Hinweis auf einen gemessenen Temperaturwert oder auf eine Materialkombination.

Zudem wird in diesem Stand der Technik weder das Problem der Haftung oder der Ablösung der Maskierung angesprochen, was insbesondere dann an Bedeutung gewinnt, wenn eine Form verwendet werden soll, die Translations- oder Rotationsbewegungen ausgesetzt ist.

Eine Kombination der beiden Verfahren Maskierung und Abdichtung ist in EP0972625A1 offenbart. Abgesehen von der Form der Trennfläche, welche der Geometrie der Form angepasst ist, handelt es sich ähnlich wie in dem in US5234653A offenbarten Rotationssinterverfahren für mehrfarbig Slushhäute, um ein System mit einer Dichtung, wobei eine scharfe Konturlinie durch eine mit einem aushärtbaren Material befüllbare Dichtung erreicht wird oder die Dichtung einen Hohlraum aufweist, der mit Druck beaufschlagt werden kann.

Bei der Verwendung von Dichtungen ist eine weitere Randbedingung zu beachten. Die Galvanoform wird nicht unbeträchtlichen Temperaturschwankungen ausgesetzt, was zur Folge hat, dass die im allgemeinen aus einem Metall, wie Nickel bestehende Galvanoform Wärmedehnungen unterliegt. Bei der Herstellung eines großflächigen Bauteils, wie beispielsweise einer Instrumententafel für ein Fahrzeug, können diese Wärmedehnungen beträchtliche Ausmaße annehmen. So sind Wärmedehnungen von 10 bis 15 mm keine Seltenheit. Bei Verwendung von Dichtungen machen diese solche Wärmedehnungen nicht, oder nicht ausreichend mit, wodurch das Einhalten einer scharfen Konturlinie problematisch sein kann.

Weitere Verfahren zur Herstellung von Kunststoffformteilen werden in der WO 02/16107 A1, in der GB 968 760 A und der JP 11 268057 A beschrieben.

Es ist Aufgabe der Erfindung ein Verfahren zu entwickeln, mit dem ein mehrfarbiges oder anderes mehrschichtiges hergestellt werden kann, welches scharfe Trennlinien zwischen verschiedenen Farben, Materialien, Oberflächeneffekten oder Kombinationen derselben aufweist.

Diese Aufgabe wird durch die Merkmale des Patentanspruchs 1 gelöst. Es wird beispielsweise für eine Fahrzeuginnenraumverkleidung flüssiges oder pulverförmiges Kunststoffmaterial in eine Form eingebracht, diese Form aufgeheizt sodass das Kunststoffmaterial schmilzt und chemische oder mechanische Bindungen eingeht, sodass sich eine geschlossene Schicht ausbildet und diese Schicht wieder abgekühlt. Diese Prozessfolge wird so oft wiederholt, wie verschiedene Farben oder Materialien zum Einsatz kommen. Um die einzelnen Kunststoffmaterialien so zu verteilen, dass es Bereiche verschiedenen Materials oder Oberflächenbeschaffenheit oder Farbe entstehen, wird mindestens eine schablonenartige Abdeckung verwendet, welche vor dem Eintrag des Kunststoffmaterials, aus welchem die erste Schicht des Formteils bestehen soll, einen Teil der Form abschirmt. In dem von der Abdeckung freien Teil der Form wird eine Schicht aus einer ersten Farbe oder einem ersten Material hergestellt. Dann wird die schablonenartige Abdeckung entnommen und eine zweite Schicht aus einem Material einer anderen Farbe, Zusammensetzung oder Oberflächenbeschaffenheit aufgetragen. Da die Abdeckung sich an die Oberflächengeometrie der Form anpasst, wird keine Dichtung benötigt. Außerdem entfallen jegliche Probleme in Zusammenhang mit Wärmedehnungen, da die Schablone einerseits entweder ähnlichen Wärmedehnungen wie die Form unterworfen ist, oder das Verhältnis von Wärmedehnungen des Schablonenmaterials und Wärmedehnung des Formmaterials genau bestimmbar ist.

Allerdings muss die Haftung der Abdeckung auf der Form gewährleistet sein. Aus diesem Grund wird in einem ersten Ausführungsbeispiel eine elastische Abdeckung verwendet. Diese elastische Abdeckung kann Bereiche einschließen, welche bei Auflage der Abdeckung auf der Form ein Luftpolster enthalten. Wenn derartige Bereiche bei Auflage der Abdeckung auf der Form mit einem Anpressdruck beaufschlagt werden, entweicht Luft aus dem Luftpolster. Bei nachlassendem Anpressdruck wird das elastische Rückstellvermögen der Abdeckung ausgenützt und die Hohlräume unter Unterdruck fixieren die Abdeckung in der Form. Zusätzlich enthält die elastische Abdeckung magnetisierbare Partikel, welche an einer Form aus magnetischem Material oder an Magnetkrafterregern, welche auf der Rückseite der Form angebracht sind, so lange haften, bis das in dem abgedeckten Bereich gewünschte Material ausgewählt worden ist und in der Form haftet.

Somit kann eine beliebig geformte mehrfarbige Oberfläche hergestellt werden, welche beliebig begrenzt wird. Dabei kann das Slushverfahren oder Rotationssinterverfahren, wie es für einfarbige Formhäute gebräuchlich ist, fast ohne Änderung der Werkzeuge oder des Verfahrensablaufs für eine neue Produktlinie verwendet werden.

Als einzige erforderliche Modifikation müssen magnetisierbare Bereiche an der Außenseite der Form vorgesehen werden. Diese magnetisierbaren Bereiche müssen ein Magnetfeld erzeugen können oder unterbrechen können, wenn die Abdeckung nicht mehr auf der Form haften soll.

Die Erfindung betrifft ein Verfahren und eine Vorrichtung zur Herstellung eines mehrfarbigen oder mehrschichtigen oder aus mehreren Komponenten unterschiedlicher Oberflächeneigenschaften bestehenden Kunststoffformteils im sogenannten Rotationssinterverfahren. In diesem Verfahren wird ein erstes Rohmaterial als Pulver in eine die Geometrie des Kunststoffformteils abbildende Form, die sogenannte Galvanoform, eingebracht. An den Orten, an welchen das pulverförmige erste Rohmaterial nicht erwünscht ist, wird eine elastische Abdeckung an der Innenwand dieser Galvanoform vorgesehen. Diese Abdeckung liegt formschlüssig an der Struktur der Oberfläche der Innenwand der Galvanoform an. Wenn die Galvanoform eine strukturierte Oberfläche aufweist, genügt die Haftung mit den auf der Galvanoform vorhandenen Oberflächenstrukturen (Narbungen) um eine Positionierung der Abdeckung zu gewährleisten. Allerdings wird die Galvanoform zusammen mit dem Pulverkasten in Rotation versetzt, damit das Kunststoffpulver gleichmäßig auf der Formoberfläche verteilt wird. Somit ist eine zusätzliche Haltekraft für die Abdeckung erforderlich. Die Abdeckung enthält daher magnetisierbare Partikel, die durch auf der Rückseite der Galvanoform angebrachte Erzeuger eines zeitlich veränderlichen Magnetfeldes die Abdeckung an einer beliebigen Stelle der Innenwand der Galvanoform halten. Durch Wärmeeinwirkung schmilzt das Kunststoffpulver auf der Oberfläche der Innenwand der Galvanoform an. Allerdings soll die Abdeckung weder anschmelzen noch sich bei der Rotationsbewegung von der Innenwand der Galvanoform lösen. Um die Haftung von Abdeckung und Galvanoform zu verbessern, wird ein Teil der Galvanoform mit der mit magnetisierbaren Partikeln versehenen dünnwandigen Abdeckung ausgelegt. Eine derartige Abdeckung besteht aus einem elastischen Kunststoff, in welchem magnetische oder magnetisierbare Partikel, wie beispielsweise Eisenspäne enthalten sind. Dieser elastische Kunststoff kann ein Silikon sein, aber auch andere hochtemperaturbeständige Kunststoffe können zum Einsatz kommen. Die magnetisierbaren Bereiche oder Partikel befinden sich im Zentrum des Querschnitts der Abdeckung. Eine derartige Abdeckung soll daher dünnwandig ausgeführt sein, die notwendige Temperaturbeständigkeit aufweisen und nicht mit der Form verkleben, wenn keine magnetische Wechselwirkung mit den magnetisierbaren Partikeln in der Abdeckung erfolgt.
Fig. 1a bis 1d beschreibt die Verfahrensschritte zur Herstellung einer zweifarbigen Formhaut
Fig. 2 ist ein Anwendungsbeispiel für eine derartige Formhaut im Automobilbereich
Fig. 3a ist ein Querschnitt durch die Abdeckung in einer ersten Ausführungsform
Fig. 3b ist ein Querschnitt durch die Abdeckung in einer zweiten Ausführungsform
Fig. 3c ist ein Detail der in Fig. 3a dargestellten Abdeckung
Fig. 4a zeigt einen Ausschnitt aus einer Form mit verschiedenen Schablonen
Fig. 4b zeigt einen Ausschnitt aus der Form nach Fig. 4a nach Entnahme eines ersten Teils der Schablonen
Fig. 4c zeigt einen Ausschnitt aus der Form nach Fig. 4a nach Entnahme eines zweiten Teils der Schablonen
Fig. 5 zeigt ein Detail einer der Schichten von Polymermaterial
Fig. 6 zeigt eine Ausführungsvariante für die Befestigung einer Abdeckung auf einer Form
Fig. 7 zeigt eine Variante für die Befestigung einer Abdeckung nicht gemäß der Erfindung
Fig. 8 zeigt eine Variante für die Befestigung einer Abdeckung nicht gemäß der Erfindung

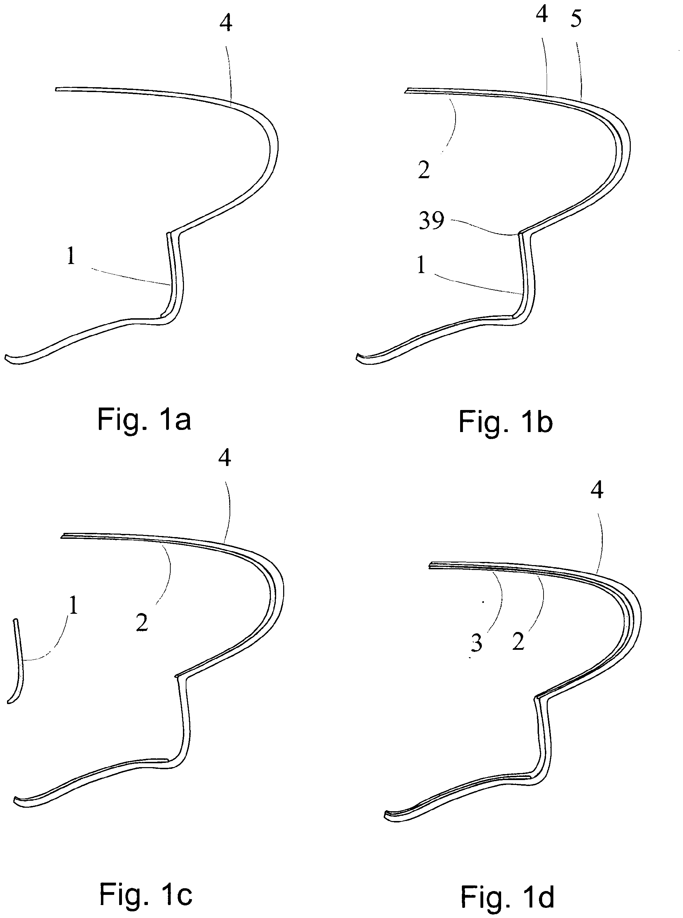

In Fig. 1a bis 1d ist in stark vereinfachter Weise dargestellt, welche Verfahrensschritte zur Herstellung einer zweifarbigen Formhaut erforderlich sind.

Eine Form 4 wird in einem ersten Arbeitsschritt mit einer Abdeckung 1 versehen, wobei die Abdeckung und die Form im Schnitt dargestellt sind. Form und Abdeckung können im Prinzip eine beliebige dreidimensionale Oberfläche aufweisen.

Die Abdeckung haftet auf der Form durch magnetische Wechselwirkung mit einem auf der Rückseite der Form 5 angebrachten Erzeuger eines Magnetfeldes.

Die Abdeckung kann beliebige Ausdehnung haben. Die Abdeckung besteht aus einem elastischen Material, in welches magnetisierbare Partikel oder Bereiche eingelegt sind. Die Abdeckung muss aus temperaturbeständigen, verzugsfreiem Material oder einem Material, welches durch seine Elastizität Wärmedehnungen ausgleichen kann, bestehen, beispielsweise zumindest teilweise aus Silikon.

In Fig. 1 b ist die Beschichtung der Form mit einer ersten Schicht 1 dargestellt. Die erste Schicht besteht pulverförmigem Kunststoff, beispielsweise PVC. Durch Rotation der Form verteilt sich dieses Pulver gleichmäßig über die Oberfläche der Form. Die Form wird beheizt und die einzelnen Partikel des Pulvers versintern miteinander. Auf der Abdeckung haftet das Pulver nicht oder nur zu einem geringen Teil, da die Abdeckung wärmeisolierende Wirkung entfaltet.

Wenn eine ausreichende Schichtdicke erreicht ist, was unter anderem von der gewünschten Oberflächenbeschaffenheit, der erforderlichen Stabilität der Formhaut für deren Manipulation, und den Anforderungen an die Haptik abhängig ist, wird die Form über deren Rückseite 5 gekühlt. Die Entnahme der Abdeckung ist in Fig. 1 c dargestellt. Nicht dargestellt ist eine Entnahmevorrichtung, welche an der Abdeckung andockt, die Deaktivierung des Magnetfelderregers auslöst und die Abdeckung beispielsweise unter Vakuum abnimmt. Eine weitere Möglichkeit besteht darin, die Form so zu drehen, dass die Abdeckung bei Entmagnetisierung aus der Form herausfällt. In einer anderen Ausführungsform kann die Abdeckung auch unter Anwendung von Druckluft weggeblasen werden. Durch die Verwendung von Druckluft wird die Abdeckung zerstörungsfrei entfert, was die Standzeit einer derartigen Abdeckung erhöht. Die Notwendigkeit und Ausführungsform der Entnahmevorrichtung ist abhängig von der Oberfläche des Formteils, daher in dieser Figur nicht dargestellt.

Nach Entnahme der Abdeckung wird in Fig. 1d die zweite Schicht aufgetragen. Die zweite Schicht haftet auf der ersten Schicht wiederum durch Versinterung, weil die erste Schicht mit aufgeheizt wird, wenn ein neuer Heizzyklus der Form abläuft. Durch genaue Temperatursteuerung bleiben Oberfläche, Farbe und die durch die Abdeckung erzeugte Trennlinie 39 erhalten, was zu der gewünschten scharfen Konturlinie führt. Vorteilhafterweise erfolgt der Eintrag der zweiten Schicht in die bereits aufgeheizte Form. Die zweite Schicht füllt den von der Abdeckung eingenommenen Raum aus und verbindet sich mit der ersten Schicht. Um diesen Vorgang zu beschleunigen und eine gleichmäßige Schichtdicke zu erreichen, durchläuft die Form eine Anzahl von Dreh- und oder Rüttelbewegungen. Wenn die gewünschte Konsistenz der Formhaut oder des Teiles der Formhaut, der eine erste Kombinationen von optischen und haptischen Eigenschaften aufweist, erreicht ist, wird ein Kühlzyklus eingeleitet. Diese Heiz- und Kühlzyklen werden in einer vorteilhaften Ausgestaltung der Erfindung mittels Öl durchgeführt, welches entlang der Rückseite der Form zirkuliert. Dieser Ablauf wird so oft wiederholt, bis alle Abdeckungen entfernt und durch das gewünschte Polymermaterial, textile Material oder Ledermaterial ersetzt worden sind. Überschüssiges Material wird bei Verwendung von Pulver in den Pulverkasten zurückgekippt, welcher während der Herstellung des Formhautteils aus dem ersten Polymermaterial mit der Form verbunden gewesen ist.

Das Verfahren zur Herstellung einer derartigen mehrteiligen Formhaut kann beliebig oft wiederholt werden, bis aus einer Summe von einzelnen Formhautteilen eine zusammenhängende Formhaut hergestellt worden ist.

Nach einer erneuten, endgültigen Abkühlungsphase kann die Formhaut entnommen werden.

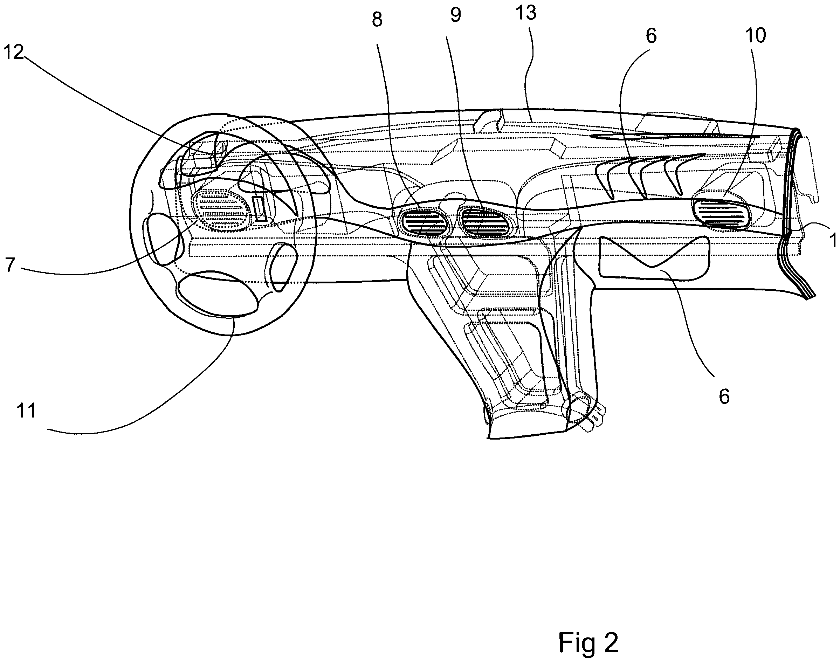

Fig. 2 zeigt ein mögliches Anwendungsbeispiel einer derartigen Formhaut. In dieser Figur ist eine Instrumententafel eines Fahrzeugs dargestellt Die Formhaut kann einteilig von der Hutze bis zu den Ausströmem ausgeformt sein. In diese Formhaut können verschieden gestaltete, das heißt, verschieden gefärbte oder strukturierte Teilabschnitte integriert werden. Schematisch sind die Abschnitte, welche von der Schicht 2 gebildet werden, als Designelement 6 bezeichnet. Ein gedachter Schnitt 7 zeigt einen möglichen Aufbau aller Schichten.

Die fertige Formhaut wird in einer Ausführungsvariante nach der Durchführung eines Hinterschäumungsprozesses und/oder einer Verbindung mit einem Kunststoffträger beschnitten oder ausgestanzt, um Ausströmeröffnungen zu freizugeben (7,8,9,10) oder eine Ausnehmung für Lenksäule 11, Anzeigebereich 12, Defrosterkanäle oder Windschutzscheibenbelüftung 13 vorzusehen. In einer anderen Ausführungsvariante werden Abdeckungen für diese Öffnungen in die Form 4 miteingelegt und bis zum Ende der Herstellung der Formhaut nicht entnommen. Somit kann auf einen nachträglichen Arbeitsschritt des separaten Beschneidens der Formhaut verzichtet werden.

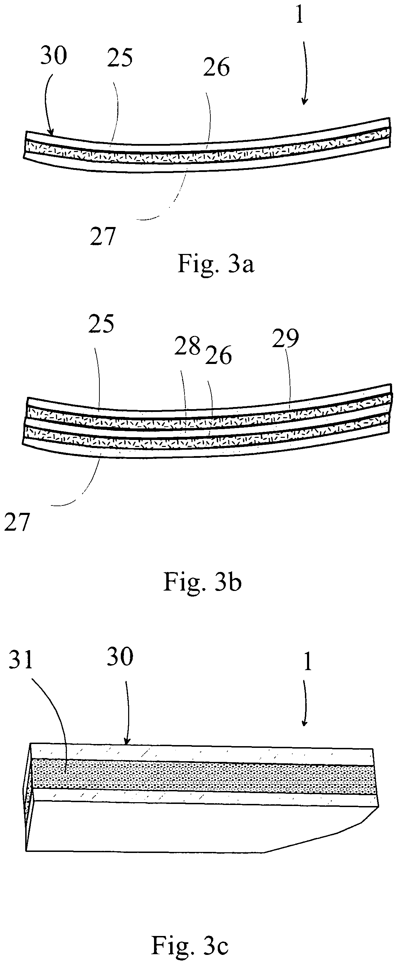

Fig. 3a zeigt ein erstes Ausführungsbeispiel der Abdeckung 1 im Schnitt. Die Abdeckung besteht aus einer Deckschicht 25, einer Kernschicht 26 und einer Grundschicht 27. Das Grundmaterial für alle Schichten ist ein wärmebeständiger, elastischer Kunststoff, beispielsweise Silikon. Es können auch andere hochtemperaturbeständige Kunststoffe zum Einsatz kommen. Es ist auch möglich, eine Beschichtung mit einem hochtemperaturbeständigen Kunststoff vorzusehen, beispielsweise eine Teflonbeschichtung. Mindestens eine oder mehrere weiche, wärmebeständige Schichten im Inneren der Abdeckung werden durch eine sehr dünne hochtemperaturbeständige Beschichtung umhüllt. Diese weicheren Schichten enthalten Vorteilhafterweise auch Elastomermaterial. In zumindest einigen der Kemschichten befinden sich magnetisierbare Partikel oder Bereiche. Dabei kann es sich beispielsweise um Eisenspäne handeln. Die magnetisierbaren Partikel 31 befinden sich im Mittelbereich des Schichtquerschnitts, um zu vermeiden, dass die Form durch Partikel zerkratzt wird. Da die magnetisierbaren Partikel selbst im allgemeinen keine Hafteigenschaften mit der sie aufnehmenden Schicht haben, ist die Schicht, welche die magnetisierbaren Partikel enthält, eine klebefähige Schicht.

Falls der Magnetisierungsgrad der magnetisierbaren Partikel einer einzigen Schicht nicht ausreicht, weil die Abdeckung eine große Oberfläche überstreicht, können auch mehrere magnetisierbare Schichten übereinander vorgesehen werden, wie in Fig. 3b dargestellt ist.

Eine derartige Abdeckung kann beispielsweise in einer eigens dafür bereitgestellten Form, einem sogenannten Prozessgalvano, hergestellt werden. Das Kunststoffmaterial wird aus einem Extruder, einem Vorratsbehälter, einer Sprühvorrichtung oder ähnlichem in flüssigem oder fließfähigen Zustand auf die Oberfläche des Prozessgalvanos aufgetragen. Die Oberfläche dieses Prozessgalvanos entspricht der Oberfläche der Form, in welcher die mehrschichtige oder mehrfarbige Formhaut hergestellt wird. Die erste Schicht oder Grundschicht 27 besteht dabei aus wärmebeständigem Material. Es handelt sich beispielsweise um ein hochtemperaturbeständiges Polymermaterial, wie Silikon oder Teflon. Auf diese Grundschicht 27 wird eine haftfähige Zwischenschicht aufgetragen. Die magnetischen oder magnetisierbaren Partikel werden auf diese Zwischenschicht aufgetragen, die Hafteigenschaften aufweist, also beispielsweise als Klebeschicht ausgebildet sein kann. Diese Klebeschicht befindet sich als Zwischenschicht zwischen einer oder mehreren elastischen und/oder nicht haftenden oder mit einer nicht haftenden Beschichtung versehenen Schichten. Wenn es sich bei den magnetisierbaren Partikeln um Metallpartikel handelt, kann auch vorgesehen werden, sie in der Elastomerschicht oder der haftenden Schicht durch die Schwerkraft absinken zu lassen. Dazu wird die Elastomerschicht mindestens einmal aufgeheizt, bevor die magnetisierbaren Partikel eingebracht werden. Wenn die Schicht einen zähflüssigen oder flüssigen Zustand erreicht hat, erfolgt der Eintrag der magnetisierbaren Partikel. Während dieses Sinkprozesses findet eine fortwährende Abkühlung der Form statt. Durch genaue Temperatursteuerung wird der Sinkvorgang der Partikel unterbrochen, weil es zur Verfestigung der Kernschicht kommt und die Partikel im Mittenbereich der Kernschicht im mittleren Bereich des Querschnitts der Abdeckung haften bleiben. Diese Variante erlaubt es, auf mehrschichtige Abdeckungen zu verzichten.

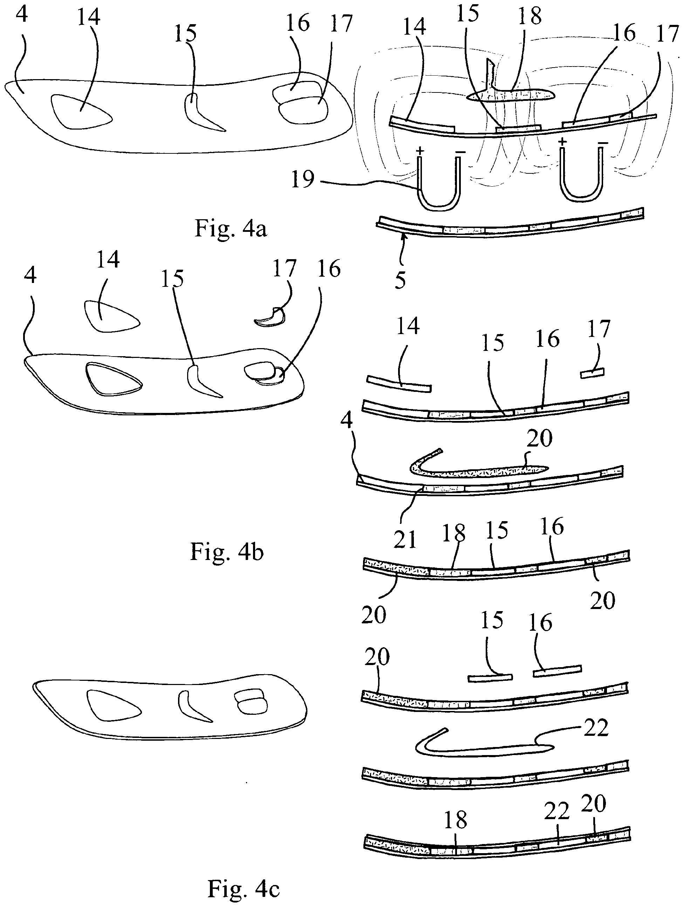

Fig. 4a zeigt einen Ausschnitt aus einer Form, auf welcher eine Vielzahl von Abdeckungen, die als Schablonen ausgebildet sind, angebracht sind. Die Schablonen 14, 15, 16, 17 werden in den Bereichen auf die Form gelegt, in denen ein sich vom Grundmaterial in Farbe, Zusammensetzung oder Oberflächenbeschaffenheit unterscheidendes Material aufgebracht werden soll. Die Schablonen werden positioniert und haften entweder an der magnetisierbaren Form oder werden durch ein auf der Rückseite der Form angebrachtes Magnetfeld 19 in ihrer Position gehalten. In einem ersten Verfahrensabschnitt wird das Grundmaterial 18 in fließfähiger Form auf die Form aufgebracht. Diese fließfähige Form beinhaltet Pulver oder Granulat oder Polymermaterial in flüssigem oder zähflüssigen Zustand. Das fließfähige Material wird gleichmäßig über die Form verteilt. Dabei füllt das fließfähige Material die Zwischenräume zwischen den einzelnen Schablonen. Wenn das fließfähige Material in Pulverform vorliegt, wird die Form in beheiztem Zustand mit Pulver befüllt, im allgemeinen, indem ein Pulverkasten an die Form angedockt wird. Das auf der Oberfläche der Form liegende Pulver schmilzt an und beginnt zu versintern. Wenn eine homogene, also vollständige Schmelze, des Pulvermaterials vorliegt, wird die Beheizung noch so lange fortgesetzt, bis die Schichtdicke ausreicht, um eine zusammenhängende, stabile Formhaut zu bilden.

Wenn das fließfähige Material in flüssiger Form in die Form nach einem Gießverfahren eingebracht oder nach einem Sprühverfahren aufgesprüht wird, ist eine gleichmäßige Schichtdicke entweder in mehreren Heiz/Kühlzyklen erreichbar, in denen fortwährend neue dünne Schichten, ähnlich wie Lackfilme im Sprühverfahren aufgetragen werden, oder durch die Einwirkung von Zentrifugalkräften gleichmäßig auf die Form verteilt werden. Die Auswahl des Verfahrens hängt von der Viskosität der Flüssigkeit, deren Verfestigung bei Abkühlung der Form, deren Oberflächenspannung, deren Adhäsionsverhalten an der Form und ähnlichen Parametern ab.

Prinzipiell wird ein Polymermaterial im flüssigen Zustand eine analoge Prozessfolge durchlaufen, wie ein Pulvermaterial: Aufheizen, der Form, Eintrag des Polymermaterials, Verteilung des Polymermaterials in der Form zur Bildung einer Formhaut annähernd konstanter Dicke, zumindest teilweise Abkühlung der Form. Nach einem zumindest teilweise abgeschlossenen Kühlzyklus ist das Polymermaterial so weit verfestigt, dass ein weiterer Teil der Abdeckungen entnommen werden kann. Der Kühlvorgang braucht dabei keineswegs abgeschlossen zu sein, jedem Polymermaterial können auch Zusatzstoffe beigemischt werden, welche die Tropffestigkeit des Polymermaterials erhöhen. Wenn das Polymermaterial bei Entnahme einer Abdeckung keine Fäden zieht, ist es nicht notwendig, den Kühlvorgang vollständig ablaufen zu lassen, was zusammen mit einer Einsparung an Zeit auch eine nicht unwesentliche Energieeinsparung erlaubt.

Die Entnahme eines weiteren Teils der Schablonen ist in Fig. 4b schematisch dargestellt. In diesem Ausführungsbeispiel werden die beiden Schablonen 14 und 17 entnommen, indem man das Magnetfeld abschaltet oder ein stärkeres Magnetfeld im Bereich der Innenseite der Form aufbaut, welche die Schablonen anzieht. Alternativ dazu kann die Entnahme der Schablonen über Druck oder Vakuum erfolgen.

In einem nächsten Schritt wird die Form aufgeheizt und der Zyklus des Eintrags von einem anderen Polymermaterial beginnt. Dieses Polymermaterial wird als Deckschicht 2 (20) bezeichnet und dessen Eigenschaften können sich von dem ersten

Polymermaterial unterscheiden. Je nach Art des Materials kann zwischen Rotationssinterverfahren, Sprühverfahren, Klebeverfahren, Schäumverfahren oder Kombinationen derselben ausgwählt werden. Für das Rotationssinterverfahren erfolgt die Herstellund der Deckschicht 2 in analoger Weise, wie die Deckschicht 1, was in Fig. 4a bereits ausgeführt wurde.

Das Polymermaterial haftet auf den als Schablonen ausgebildeten Abdeckungen nicht, weil diese einerseits eine Antihaftbeschichtung aufweisen können, andererseits als Isoliermaterial dienen, was bedeutet, dass es zu gar keinem Versintern von Pulver oder zur Verfestigung eines flüssigen Materials im Rahmen eines auf die Heizperiode folgenden Abkühlungszyklus kommt.

Dasselbe gilt zumindest teilweise auch für die schon vorhandene Schicht aus Grundmaterial 18. Sie wirkt als Isolationsschicht, sodass kaum Polymermaterial, welches zur Deckschicht 2 gehört, auf dem Grundmaterial haftet und es somit nicht zu einer wesentlichen Erhöhung der Schichtdicke kommt. Nur im Randbereich 21 schmelzen die Umrisse der von der entnommen Schablone freigelegten Grundschicht an und bilden mit der Deckschicht 2 einen Verbund. Da der Heizzyklus nur wenige Sekunden beträgt, und gleich anschließend eine schnelle, teilweise Abkühlung erfolgt, werden die Randbereiche 21 sich zwar so weit erweichen, dass mit den Partikeln oder Molekülen der Deckschicht 2 eine physikalische oder chemische Bindung zustande kommt, aber der Randbereich 21 eine scharfe Kontur ausbildet. Ein mögliches Heizverfahren zur Realisierung von derart kurzen Zykluszeiten ist in DE4106964A1 beschrieben.

Da die Temperatur beim Heizzyklus einen Einfluß auf das Magnetfeld hat, können zeitlich variable Magnetfelder auf die Schablone aufgebracht werden. Somit kann einer schwindenden Magnetisierbarkeit des magnetischen Materials der Schablonen gezielt entgegengewirkt werden. Zudem ist es auch möglich, magnetisierbare Pulver mit hoher Temperaturbeständigkeit einzusetzen. Solche magnetisierbare Pulver sind beispielsweise in der WO02069357A2 offenbart.

Die in Fig. 4b dargestellte perspektivische Ansicht zeigt die Entnahme der Schablonen 14 und 17 unter abgeschaltetem Magnetfeld, Gegenmagnetfeld, Druck oder Vakuum. Derselbe Vorgang ist noch einmal im Schnitt dargestellt. Die beiden Schablonen 15, 16 verbleiben auf der Oberfläche der Form 4. Da sie im Grundmaterial 18 zumindest teilweise eingeschlossen sind, verbleiben sie entweder von selbst in ihrer Position oder werden durch Zuhilfenahme von lokalen Magnetfeldern, geringer Druckkräfte oder ähnlichem in ihrer Position gehalten.

In Fig. 4c wird schließlich dargestellt, dass die beiden Schablonen 15, 16 entnommen werden. In die beiden Hohlräume wird durch dieselben Verfahrensschritte wie unter Fig. 4a oder Fig. 4b beschrieben wurde, ein weiteres Polymermaterial als Deckschicht 3 (22) eingebracht. Die Magnete sind der Übersichtlichkeit wegen in Fig. 4b und Fig. 4c nicht dargestellt.

Wenn das Grundmaterial als Deckschicht 1, die Deckschicht 2, Deckschicht 3 und eventuell noch weitere vorzusehende Deckschichten, je nach Anzahl und Komplexität der gewünschten Färbung, Musterung oder Oberflächenstrukturen in der Formhaut unterschiedliche Schmelzpunkte aufweisen, empfiehlt es sich, die Schichten im zeitlichen Ablauf nach fallenden Schmelzpunkten aufzutragen. Das bedeutet, dass die Schicht mit dem höchsten Schmelzpunkt als Grundschicht, und die Schichten mit niedrigeren Schmelzpunkten in jedem folgenden Heiz/Kühlzyklus nie mehr so weit aufgeheizt werden müssen, dass die Kontur der jeweils vorherigen Schicht in Mitleidenschaft gezogen werden kann. Mit dieser Vorgangsweise kann die Bandbreite kombinierbarer Materialien erhöht werden. Im Prinzip besteht die Möglichkeit, Stoffe, aber auch Leder einzusetzen und diese Materialien wegen des Wegfalls des Problems der Wärmedehnungen gezielt mit Polymermaterialien zu kombinieren.

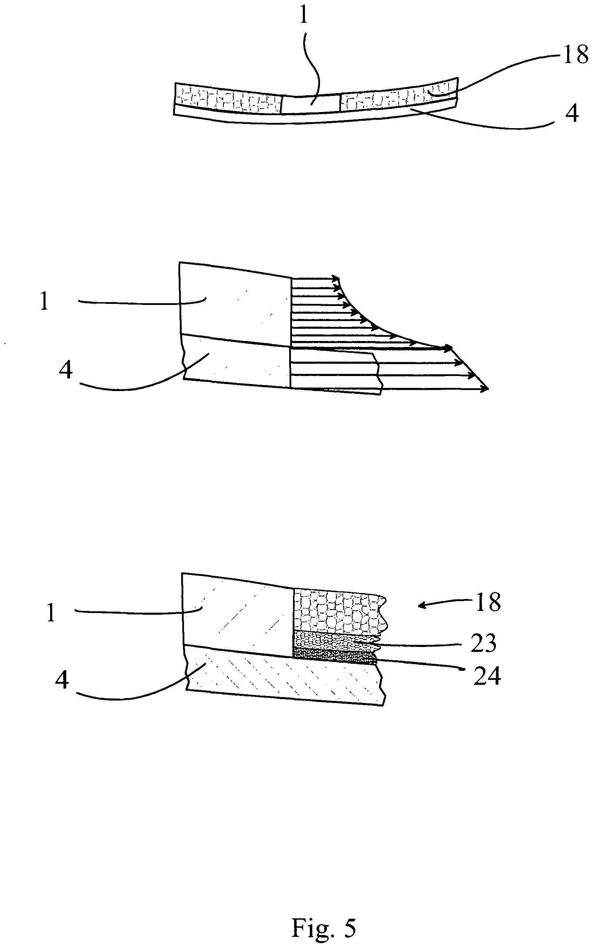

Fig. 5 zeigt einen möglichen Schichtaufbau. Wenn es sich bei dem Grundmaterial 18 um ein pulverförmiges Material handelt, entsprechen den dargestellten Schichten das schwach versinterte Grundmaterial 18, ein Bereich starker Versinterung 23 und ein im wesentlichen amorpher, homogener Bereich 24, welcher aus der Schmelze entstanden ist. Der amorphe, homogene Bereich bildet die Oberfläche der Haut aus, die stark versinterte Schicht ist eine Übergangsschicht und die schwach versinterte Schicht des Grundmaterials 18 enthält Gasräume. Dieser Schichtaufbau gewährleistet einerseits den oft gewünschten Effekt einer fühlbaren Nachgiebigkeit der Haut, andererseits wirkt die schwach versinterte Schicht gegenüber zukünftigen Aufheizzyklen als Isolationsschicht, weil sie schlecht wärmeleitende Gasräume enthält. Die Isolationswirkung entspricht der eines Schaumstoffs.

Wenn es sich bei dem Grundmaterial 18 nicht um ein in Pulverform oder Granulatform vorliegendes Polymermaterial handelt, sondern um ein thermoplastisches Material, welches in flüssigem oder zähflüssigen Zustand in die Form eingebracht wird, kann eine derartige Schichtfolge durch Schäumvorgänge erhalten werden. Im untersten Bereich, welcher an die Form 4 anschließt, wird das treibmittelhältige Material vollständig aufgeschmolzen und bildet eine glatte, homogene Oberfläche. Durch die Temperatur und die dadurch bedingten Massentransportvorgänge verlagern sich Gasblasen leicht aus dieser niedrigviskosen Schicht 24 in die darüber gelagerten Schichten 23 und 24. Bei einem Abkühlungszyklus wird dann der amorphe Bereich mit seiner homogenen Struktur "eingefroren". Da die Abkühlung auch die mittlere Schicht 12 erfasst, hat auch hier das Treibmittel wenig Zeit, eine ausgeprägte Verschäumung auszuführen, es handelt sich somit um eine Übergangsschicht von amorphem Bereich zu der obersten Schicht, in welcher durch die langsamere Abkühlung und die Isolationswirkung der darunter liegenden Schichten die Zeit gegeben ist, um eine Schaumstruktur auszubilden, weil der Reaktionsmechanismus mit dem in dem Polymermaterial enthaltenen Treibmittel ungehindert ablaufen kann.

Die Schichten nur der Anschaulichkeit wegen als getrennte, von einander klar zu unterscheidende Schichten gezeichnet, der Übergang kann fließend sein, ohne dass die einzelnen Schichten klar voneinander abzugrenzen sind.

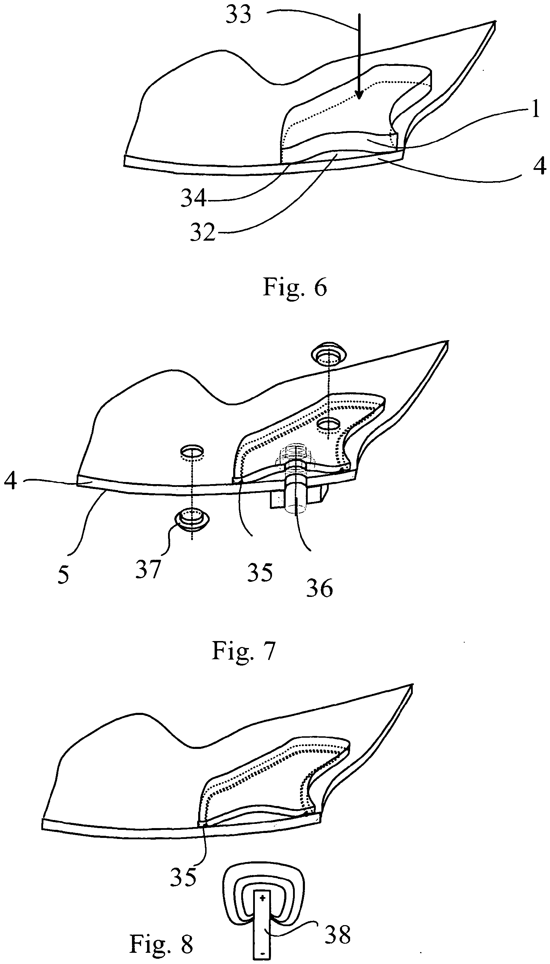

Fig. 6 zeigt eine Variante einer Abdeckung 1. Die Abdeckung 1 besteht aus elastischem Material und liegt in unbelastetem Zustand nicht vollständig auf der Oberfläche der Form auf. Der Hohlraum 32 zwischen der Form und der Abdeckung enthält Gas, im Normalfall Luft. Wenn auf die Abdeckung 1 eine Druckkraft 33 ausgeübt wird, entweicht diese Luft über die Auflageflächen 34. Wird die Druckkraft 33 dann wieder weggenommen, nimmt die Abdeckung wieder ihre ursprüngliche Gestalt an, weil das elastische Rückstellvermögen größer als die durch den Unterdruck zwischen Abdeckung und Formoberfläche entstehende Haltekraft ist. Genau diese Haltekraft bewirkt aber eine Haftung der Abdeckung auf der Formoberfläche. Dieser Effekt wird gekoppelt mit einer Magnetisierung der Abdeckung, welche magnetisierbare Partikel enthält, verwendet.

In dem nach Fig. 7 dargestellten Beispiel nicht gemäß der Erfindung wird eine steife Abdeckung, beispielsweise eine Abdeckung aus Metall verwendet. In einer ersten Ausführungsform wird die Abdeckung mittels mindestens eines mechanischen Befestigungsmittels an der Form befestigt. Sie kann eine umlaufende Dichtung 35 aufweisen. Das mechanische Befestigungsmittel 36 erfordert allerdings mindestens eine Öffnung in der Form selbst, welche durch eine eigens dafür vorgesehene Dichtung 37 abgedichtet werden muß. Zudem ist darauf zu achten, dass die Dichtung den Wärmeübergang von der Rückseite 5 der Form nicht beeinträchtigt und es nicht durch unterschiedliche Wärmedehnungen von Dichtung und Form zu sichtbaren Abdrücken in einer der Deckschichten kommt, nachdem die Abdeckung entfernt worden ist. Diese Variante kann insbesondere dann zum Einsatz kommen, wenn die Teile der mehrfarbigen Slushhäute, welche dann über den Öffnungen in der Form oder über eine Befestigungsstelle auf der Form (nicht dargestellt) zu liegen kommen, in einem nachfolgenden Verfahrensschritt ausgestanzt werden.

In dem nach Fig. 8 dargestellten Beispiel nicht gemäß der Erfindung wird eine steife Abdeckung, beispielsweise eine Abdeckung aus Metall verwendet. In dieser Ausführungsform wird die Abdeckung aus magnetisierbarem Material hergestellt. Sie kann eine umlaufende Dichtung 35 aufweisen. Durch die Dichtung kann einerseits gewährleistet werden, dass die Oberfläche der Form bei wiederholter Verwendung der Abdeckung keinen Schaden durch Kratzer und dergleichen erleidet und andererseits verschiedene Materialkombinationen mit unterschiedlichen Wärmeausdehnungseigenschaften problemlos zum Einsatz kommen können.

### Bezugszeichenliste

1. Abdeckung
2. erste Schicht
3. zweite Schicht
4. Form
5. Rückseite der Form
6. Designelement
7. Ausströmer
8. Ausströmer
9. Ausströmer
10. Ausströmer
11. Lenksäule mit Lenkrad
12. Anzeigebereich
13. Defrostkanal und Windschutzscheibenbelüftung
14. Schablone
15. Schablone
16. Schablone
17. Schablone
18. Grundmaterial
19. Magnetfeld
20. Deckschicht 2
21. Randbereich
22. Deckschicht 3
23. Bereich starker Versinterung oder geringer Schaumbildung
24. amorpher Bereich
25. Deckschicht
26. Kernschicht
27. Grundschicht
28. Zwischenschicht
29. Zwischenschicht mit magnetischen Partikeln
30. Oberfläche der Deckschicht
31. magnetisierbare Partikel
32. Hohlraum
33. Druckkraft
34. Auflagefläche
35. umlaufende Dichtung
36. Befestigungsmittel
37. Dichtung
38. Magnetisches Mittel
39. Trennlinie

## Patentansprüche

1. Verfahren zur Herstellung eines Kunststoffformteils mit Bereichen unterschiedlicher Farbe, Oberflächenbeschaffenheit oder Materials, welches die folgenden Schritte umfasst: Einlegen mindestens einer Abdeckung (1) in eine Form (4), wobei die Abdeckung (1) Teile oder zumindest einen Teil der Schichten bildenden Oberflächen der Form zeitweise abdeckt, Beheizung der Form, Eintrag eines pulverförmigen, flüssigen oder granulatförmigen Kunststoffmaterials in die Form, Beheizung und Bewegung der Form, wobei die Form eine Anzahl von Dreh- oder Rüttelbewegungen durchläuft, teilweise Abkühlung der Form, Entnahme der Abdeckung(en) aus der Form, Aufheizung der Form, Eintrag eines zweiten Kunststoffmaterials in die Form, Beheizung und Bewegung der Form, wobei die Form eine Anzahl von Dreh- oder Rüttelbewegungen durchläuft, Verbindung des Kunststoffmaterials zu einer zweiten zusammenhängenden Schicht (3), welche an die erste Schicht zumindest teilweise anschließt, wobei die Hohlräume, die nach Entnahme der Abdeckung(en) (1) verblieben sind, von dieser zweiten Schicht (3) aufgefüllt werden, Wiederholung dieser Pozessfolge, bis alle Abdeckungen entnommen und durch mindestens eine weitere Kunststoff-, Textil- oder Lederschicht ersetzt sind, endgültige Abkühlung der Schichten und Entnahme des Kunststoffformteils aus der Form, wobei beim Eintrag eines pulverförmigen Kuntstoffmaterials dieses in der Form zu einer zusammenhängenden Schicht (2) versintert, und wobei beim Eintrag eines flüssigen Kunststoffmaterials zumindest eine zusammenhängende, fließfähige Schicht aus flüssigem oder zähflüssigen Polymermaterial hergestellt wird, **gekennzeichnet dadurch, dass** zumindest ein Teil der Abdeckungen durch Magnetkraft in der Form gehalten wird, wobei die mindestens eine Abdeckung (1) magnetisierbare Partikel (31) enthält. die von einem elastischen Kunststoffmaterial eingeschlossen sind.

2. Verfahren nach Anspruch 1, **gekennzeichnet dadurch, dass** die Magnetkraft erzeugt wird, solange die Abdeckung in der Form haften soll.

3. Vorrichtung zur Herstellung eines Kunststoffformteils nach einem Verfahren nach Anspruch 1 oder 2 mit mindestens einer Form (4), welche mindestens eine Abdeckung (1) enthält und besagte Abdeckung Teile der zumindest einen Teil der Schichten bildenden Oberfläche der Form zeitweise abdeckt, wobei mindestens eine Abdeckung zumindest teilweise aus magnetisierbarem Material besteht wobei die Abdeckung (1) in der Form haftet, wenn ein Magnetfeld von der Rückseite der Form (5) aufgebaut ist, wobei die Abdeckung (1) magnetisierbare Partikel (31) enthält,
**gekennzeichnet dadurch, dass** die magnetisierbaren Partikel (31) von einem elastischen Kunststoffmaterial eingeschlossen sind.

4. Vorrichtung nach Anspruch 3, **gekennzeichnet dadurch, dass** zumindest ein Teil des elastischen Kunststoffmaterials hochtemperaturbeständig ist.

5. Vorrichtung nach Anspruch 3, **gekennzeichnet dadurch, dass** das elastische Kunststoffmaterial ein Silikon oder zumindest eine Beschichtung aus Teflon enthält.

6. Vorrichtung nach Anspruch 3, **gekennzeichnet dadurch, dass** die magnetisierbaren Partikel Eisenspäne sind.

7. Vorrichtung nach Anspruch 3, **gekennzeichnet dadurch, dass** sich die magnetisierbaren Partikel in mindestens einer Kernschicht (26) oder Zwischenschicht (28) befinden.

8. Vorrichtung nach Anspruch 7, **gekennzeichnet dadurch, dass** zumindest die Deckschicht (25) keine magnetisierbaren Partikel enthält

## Claims

1. A method of producing a moulded plastics material part with regions of different colour, surface finish or material, which comprises the following steps:
insertion of at least one covering (1) into a mould (4), wherein the covering (1) covers at least for a time parts or at least one part of the surfaces of the mould forming layers, heating of the mould, charging of a liquid plastics material or a plastics material in the form of a powder or granulate into the mould, heating and movement of the mould, wherein the mould runs through a number of rotary or vibration movements, partial cooling of the mould, removal of the covering or coverings from the mould, heating of the mould, charging of a second plastics material into the mould, heating and movement of the mould, wherein the mould runs through a number of rotary or vibration movements, joining of the plastics material to form a second coherent layer (3) which is attached to the first layer at least in part, wherein the cavities which remain behind after removal of the covering or coverings (1) are filled by this second layer (3), repetition of this process sequence until all the coverings are removed and replaced by at least one further layer of plastics material, textile or leather, final cooling of the layers and removal of the moulded plastics material part from the mould, wherein during the charging of a plastics material in the form of a powder the latter sinters in the mould to form a coherent layer (2), and wherein during the charging of a liquid plastics material at least one coherent flowable layer is produced from liquid or viscous polymer material, **characterized in that** at least part of the coverings are held in the mould by magnetic force, wherein the at least one covering (1) contains magnetizable particles (31) which are enclosed by a resilient plastics material.

2. A method according to claim 1, **characterized in that** the magnetic force is produced for as long as the covering is to adhere in the mould.

3. An apparatus for producing a moulded plastics material part according to a method according to claim 1 or 2, with at least one mould (4) which contains at least one covering (1), and the aforesaid covering covers for a time parts of the surface of the mould forming at least one part of the layers, wherein at least one covering consists at least in part of magnetizable material, wherein the covering (1) adheres in the mould when a magnetic field is built up from the rear side of the mould (5), wherein the covering (1) contains magnetizable particles (31), **characterized in that** the magnetizable particles (31) are enclosed by a resilient plastics material.

4. An apparatus according to claim 3, **characterized in that** at least part of the resilient plastics material is resistant to high temperature.

5. An apparatus according to claim 3, **characterized in that** the resilient plastics material contains a silicone or at least a coating of Teflon.

6. An apparatus according to claim 3, **characterized in that** the magnetizable particles are iron filings.

7. An apparatus according to claim 3, **characterized in that** the magnetizable particles are present in at least one core layer (26) or intermediate layer (28).

8. An apparatus according to claim 7, **characterized in that** at least the covering layer (25) contains no magnetizable particles.

## Revendications

1. Procédé d'obtention d'une pièce moulée en matière plastique ayant des zones de différentes couleurs, de différentes propriétés de surface ou de différents matériaux comportant les étapes suivantes :
application d'au moins un revêtement (1) dans un moule (4), ce revêtement (1) recouvrant temporairement des partie ou au moins une partie des surfaces du moule formant des couches, chauffage du moule, dépôt dans le moule d'un matière plastique pulvérulente, liquide ou sous forme de granulés, chauffage et mise en mouvement du moule, le moule effectuant une série de mouvements de rotation ou de secousses, liaison de la matière plastique à une seconde couche (3) continue qui se raccorde au moins partiellement à la première couche, les cavités subsistant après retrait du ou des revêtement(s) (1) étant remplis par cette seconde couche (3), répétition de cette succession d'étapes de procédé jusqu'à ce que tout les revêtement soit retirés et remplacés par au moins une autre couche de matière plastique, de textile ou de cuir, refroidissement final des couches et retrait de la pièce moulée en matière plastique du moule, lors du dépôt d'une matière plastique pulvérulente, celle-ci étant frittée dans le moule pour former une couche continue (2), et, lors du dépôt d'une matière plastique liquide, au moins une couche fluide continue en un matériau polymère liquide ou visqueux étant formée, **caractérisé en ce que**
au moins une partie des revêtements est maintenue dans le moule par des forces magnétiques, le ou les revêtement(s) (1) renfermant des particules magnétisables (31) qui sont incluses dans une matière plastique élastique.

2. Procédé conforme à la revendication 1,
**caractérisé en ce que**
l'on produit la force magnétique tant que le revêtement doit adhérer dans le moule.

3. Dispositif d'obtention d'une pièce moulée en matière plastique par la mise en oeuvre du procédé conforme à la revendication 1 ou 2, comportant au moins un moule (4) qui renferme au moins un revêtement (1) ce revêtement recouvrant temporairement des parties de la surface du moule formant au moins une partie des couches, au moins un revêtement étant au moins partiellement constitué d'un matériau magnétisable, le revêtement (1) adhérant au moule lorsqu'un champ magnétique est établi à partir de la face arrière du moule (5), le revêtement (1) renfermant des particules magnétisables,
**caractérisé en ce que**
les particules magnétisables (31) sont incluses dans une matière plastique élastique.

4. Dispositif conforme à la revendication 3,
**caractérisé en ce qu'**
au moins une partie de la matière plastique élastique est résistante à des températures élevées.

5. Dispositif conforme à la revendication 3,
**caractérisé en ce que**
la matière plastique élastique renferme un silicone ou au moins un revêtement en téflon.

6. Dispositif conforme à la revendication 3,
**caractérisé en ce que**
les particules magnétisables sont des copeaux de fer.

7. Dispositif conforme à la revendication 3,
**caractérisé en ce que**
les particules magnétisables sont situées dans au moins une couche centrale (26) ou dans au moins une couche intermédiaire (28).

8. Dispositif conforme à la revendication 7,
**caractérisé en ce qu'**
au moins la couche de recouvrement (25) ne renferme pas de particules magnétisables.
